# EUROPEAN PATENT APPLICATION

(11) **EP 4 495 835 A2**
(43) Date of publication of application: **22.01.2025**
(21) Application number: 24218010.7
(22) Date of filing: 17.06.2021
(51) Int. Cl.: G06N 5/00

(54) **INFORMATION PROCESSING DEVICE, REGRESSION MODEL GENERATION METHOD, AND REGRESSION MODEL GENERATION PROGRAM PRODUCT**

(30) Priority: 23.06.2020 JP 2020108027
(62) Divisional of application: 21179992.9
(71) Applicant: DENSO CORPORATION, Kariya-city, Aichi-pref., 448-8661 (JP)
(72) Inventor: KADOWAKI, Tadashi, Kariya-city, Aichi-pref.,, 448-8661 (JP)
(74) Representative: Winter, Brandl - Partnerschaft mbB

(57) **Abstract**

There are provided an information processing device, a computer-implemented regression model generation method, and a program product, in which a predetermined condition is determined to be satisfied and a data set for generating a regression model is prepared based on the different criterion in a case where the performance of the regression model indicated by an evaluation index does not improve further.

## Description

The present disclosure relates to an information processing device, a regression model generation method, and a regression model generation program product.

In recent years, machine learning has become widespread, and black box optimization method has been used as an example for calculating a combinatorial optimization solution.

As an example of machine learning using black box optimization, "Designing metamaterials with quantum annealing and factorization machines" by Koki Kitai, Jiang Guo, Shenghong Ju, Shu Tanaka, Koji Tsuda, Junichiro Shiomi, Ryo Tamura published in PHYSICAL REVIEW RESEARCH 2, 013319-1 to 10 (2020) describes a method combining, using a quantum computer, Quantum Annealing (hereinafter referred to as "QA") and Factorization Machines (hereinafter referred to as "FM"), and this combined method is referred to as "FMQA".

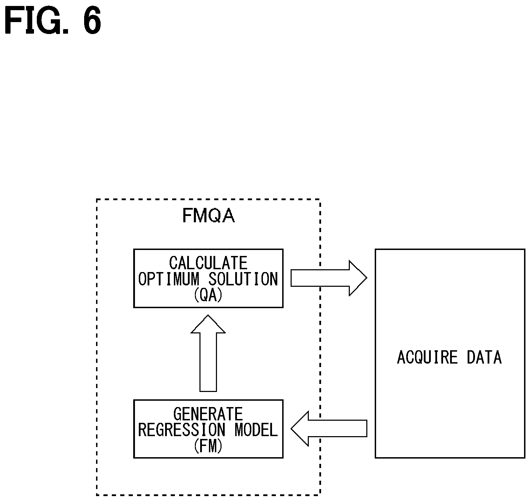

FIG. 6 is a schematic diagram showing a construction of a regression model using FMQA method. As shown in FIG. 6, FMQA method acquires data including multiple data pairs in each of which explanatory variables are paired with an objective variable, and generates a regression model (optimization function) by FM method based on the acquired data set. Then, the values of the optimum explanatory variables are obtained as the optimum solution by QA method based on the generated regression model, data is acquired again based on this optimum solution, and the regression model is generated. In this way, in FMQA, data acquisition, regression model generation, optimum solution calculation, and data acquisition based on the optimum solution are repeatedly performed, and a regression model with higher performance is constructed.

FM method generates a regression model every time so as to minimize so-called loss. In a case where the data sets used for generating the regression model are the same, the generated regression models are also the same. Thus, the FM method is a deterministic algorithm. Thus, in FM method, due to the bias of the initial data set or the like, the parameter space may not be sufficiently searched and it may not be possible to escape from the local optimum solution. For example, suppose that the optimal solution is calculated from the regression model and new data is to be acquired based on the calculated optimal solution. In a case where content of the new data to be acquired is included in the already acquired data set, it is difficult to further improve the performance of the regression model in the deterministic algorithm.

In view of the above difficulty, an object of the present disclosure is to provide an information processing device, a regression model generation method, and a regression model generation program product each of which capable of constructing a regression model with higher performance.

According to an aspect of the present disclosure, an information processing device includes: a data acquisition unit acquiring data to prepare a data set; a regression model generation unit generating a regression model using the data set prepared by the data acquisition unit; and an optimum solution calculation unit calculating an optimum solution from the regression model generated by the regression model generation unit. The data acquisition unit repetitively acquire the data based on the optimum solution and updates the data set. The regression model generation unit repetitively generates the regression model using the updated data set. The data acquisition unit acquires the data and prepares the data set based on a different criterion in response to a satisfaction of a predetermined condition. The regression model generation unit generates the regression model using the data set prepared based on the different criterion.

In the above device, the optimum solution obtained by the optimum solution calculation unit may be values of the optimum explanatory variables obtained from the regression model.

In the above-described information processing device, the algorithm used for generating the regression model by the regression model generation unit may be a deterministic algorithm which generates the same regression model when the data set used for generating the regression model is the same.

According to another aspect of the present disclosure, a regression model generation method includes: acquiring data and preparing a data set with the acquired data; generating a regression model using the data set; calculating an optimum solution from the generated regression model; repetitively acquiring the data based on the calculated optimum solution and updating the data set; and repetitively generating the regression model using the updated data set. The acquiring of data and the preparing of data set are executed based on a different criterion in response to a satisfaction of a predetermined condition, and the generating of regression model is executed using the data set prepared based on the different criterion.

According to another aspect of the present disclosure, a program product stored in a computer readable non-transitory tangible storage medium is provided. The program product includes instructions to be executed by a computer, and the instructions include the above-described method for generating the regression model.

With the present disclosure, a regression model with higher performance can be constructed.

Additional objects and advantages of the present disclosure will be more readily apparent from the following detailed description when taken together with the accompanying drawings. In the drawings:
FIG. 1 is a block diagram showing a configuration of an information processing device according to an embodiment of the present disclosure;
FIG. 2 is a flowchart showing a regression model generation process according to an embodiment of the present disclosure;
FIG. 3 is a diagram showing a comparison between a case where the regression model generation process according to the embodiment is performed and a case where the regression model generation process according to the embodiment is not performed;
FIG. 4 is a flowchart showing a regression model generation process according to a second modification of the embodiment;
FIG. 5 is a flowchart showing a regression model generation process according to a third modification of the embodiment; and
FIG. 6 is a diagram showing a construction of regression model using FMQA method.

The following will describe embodiments of the present disclosure with reference to the accompanying drawings. The embodiments described below show an example of the present disclosure, and the present disclosure is not limited to the specific configuration described below. In an implementation of the present disclosure, a specific configuration according to the embodiments may be adopted as appropriate.

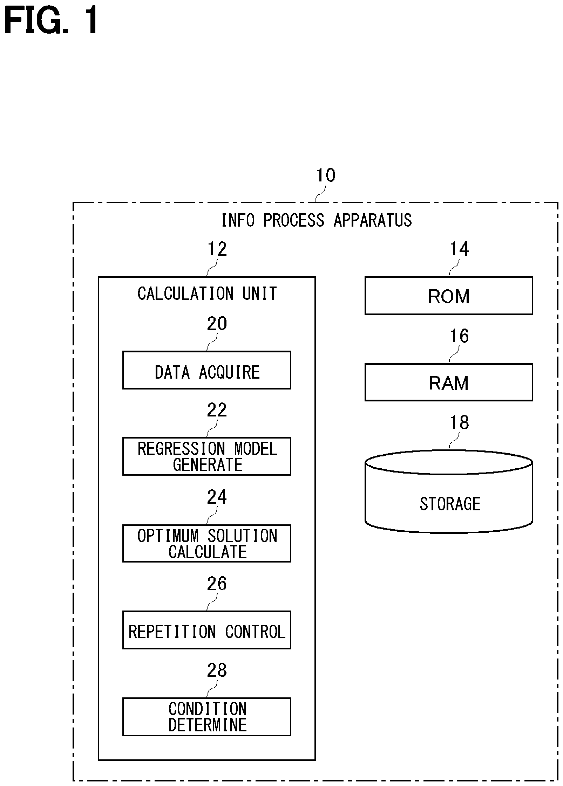

FIG. 1 is a block diagram showing an electrical configuration of an information processing device 10 according to an embodiment of the present disclosure. In the present embodiment, the information processing device 10 includes: a calculator 12 provided by a quantum computer or the like; a read only memory (ROM) 14 configured to store various programs, various data, and the like in advance; a random access memory (RAM) 16 functioning as a working area of the calculator 12 for executing the various programs; and a large capacity storage 18 configured to store various programs, various data, and the like.

The quantum computer is a computer in which a basic information unit (also known as qubit) is formed by using substances having principles of quantum mechanics, such as electrons or photons, and performs calculations using the qubit. The calculator 12 is not limited to the quantum computer, and may also be provided by a classical computer that performs calculations using a classical bit, such as CMOS transistor. The information processing device 10 may include both of the quantum computer and the classical computer described above. That is, entire part or partial part of the calculator 12 of the information processing device 10 may be provided by the quantum computer. For example, an optimum solution calculation unit 24 described later may be provided by the quantum computer, while a data acquisition unit 20, the optimum solution calculation unit 24, a repetition control unit 26, and a condition determination unit 28 may be provided by the classical computer(s).

The large capacity storage 18 stores a program of the regression model generation process described later, multiple records of data for constructing the regression model, and the like. The large capacity storage 18 may be provided by a hard disk drive (HDD) or a semiconductor storage. However, the specific implementation of the large capacity storage 18 is not limited to these examples. The large capacity storage 18 may be a computer readable non-transitory tangible storage medium.

The information processing device 10 includes: an operation input unit that receives input of various operations such as a keyboard, a computer mouse, or the like; an image display unit that displays various images, such as a liquid crystal display device or the like; and an external interface that is connected to a different information processing device or the like via a communication line and transmits various data to and receives various data from the different information processing device or the like.

The information processing device 10 of the present embodiment is capable of accurately constructing a regression model for solving a combinatorial optimization problem by successively acquiring data with a small number of data acquisition times.

As shown in FIG. 1, the calculator 12 of the present embodiment includes a data acquisition unit 20, a regression model generation unit 22, an optimum solution calculation unit 24, a repetition control unit 26, and a condition determination unit 28.

The data acquisition unit 20 acquires data for generating a regression model (optimization function). The data acquisition unit 20 may acquire one or more records of data. In the present embodiment, as an example, the data may include explanatory variables and an objective variable that are paired with one another. Therefore, the acquisition of data by the data acquisition unit 20 means acquiring of the explanatory variables and acquiring of the objective variable paired with the acquired explanatory variables.

The regression model generation unit 22 generates a regression model using multiple records of data acquired so far by the data acquisition unit 20. The multiple records of data is also referred to as a data set, and in each record of data, the explanatory variables are paired with the objective variable. The algorithm used for generating the regression model by the regression model generation unit 22 of the present embodiment is a deterministic algorithm in which the generated regression model is the same under a condition that the data set used for generating the regression model is the same. As an example, the deterministic algorithm of the present embodiment is also referred to as Factorization Machines (hereinafter also referred to as "FM").

The optimum solution calculation unit 24 obtains the optimum solution based on the regression model generated by the regression model generation unit 22. The optimum solution calculation unit 24 of the present embodiment obtains the values of appropriate explanatory variables as the optimum solution from the generated regression model. The appropriate explanatory variable values are the values of the explanatory variables that maximize or minimize the value of the objective variable calculated by the regression model (optimization function).

As an example, the optimum solution calculation unit 24 of the present embodiment obtains the optimum solution from the regression model using Quantum Annealing (hereinafter, also referred to as "QA"). However, the method for obtaining the optimum solution is not limited to QA.

The repetition control unit 26 controls the data acquisition unit 20, the regression model generation unit 22, and the optimum solution calculation unit 24 to repeat the process multiple times. That is, in each execution, the regression model generation unit 22 generates a regression model using the data set acquired by the data acquisition unit 20, and the optimum solution calculation unit 24 obtains the optimum solution of the regression model generated in the current execution. The data acquisition unit 20 acquires data for generating a next regression model based on the obtained optimum solution in the current execution. The data acquired by the data acquisition unit 20 is not particularly limited under a condition that the data is acquired based on the optimum solution. Then, the regression model generation unit 22 generates a new regression model using the data set including the newly acquired data.

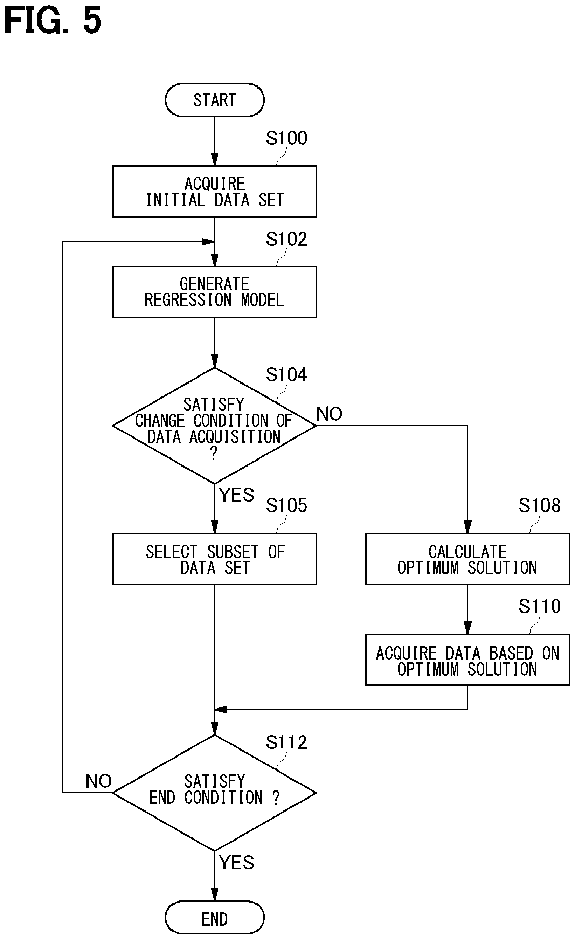

As described above, the information processing device 10 of the present embodiment repeats the process of acquiring data executed by the data acquisition unit 20 based on the optimum solution, and also repeats generation of the regression model using the acquired data set. Hereinafter, this repeated execution by the information processing device 10 is also referred to as a regression model generation process. The regression model is constructed by execution of the regression model generation process as shown in FIG. 5.

The condition determination unit 28 determines whether a predetermined condition (hereinafter referred to as "change condition of data acquisition") for changing the data acquisition method executed by the data acquisition unit 20 is satisfied. The change of data acquisition method means, for example, changing the method from the data acquisition based on the optimum solution to the data acquisition in random manner which will be described later. The condition determination unit 28 may determine the change condition of data acquisition after each process executed by the calculator 12.

Since the FM method is a deterministic algorithm, it is difficult to escape from the local optimum solution without sufficiently searching the parameter space due to the bias of the initial data set or the like. For example, suppose that the optimal solution is calculated from the regression model and the next data is to be acquired based on the calculated optimal solution. In a case where content of the next data to be acquired is included in the already acquired data set, it is difficult to further improve the performance of the regression model in the deterministic algorithm.

In the information processing device 10 of the present embodiment, in a case where the regression model generation process satisfies the change condition of data acquisition, the model generation unit 22 generates a regression model using a data set acquired based on a standard different from that of the data set used in the previous repetitive process.

Acquiring data set based on different criterion in the present embodiment means acquiring new data without being based on the optimal solution obtained from the regression model generated last time. That is, by acquiring the new data based on different criterion, it is possible to acquire the new data regardless of the optimum solution of the regression model up to that point. Thus, it is possible to generate a regression model in which the optimum solution of the generated regression model can escape from the local optimum solution. Therefore, the information processing device 10 of the present embodiment can build a regression model with higher performance.

In the information processing device 10 of the present embodiment, during the regression model generation process, in response to satisfaction of the change condition of data acquisition, the data acquisition unit 20 acquires the next data in random manner, and the regression model generation unit 22 adds the newly acquired random data to the previously acquired data set by the data acquisition unit 20. Then, the regression model generation unit 22 generates the regression model using the newly generated data set including the random data. As a result, in a case where the change condition of data acquisition is satisfied, the regression model is generated using the data set acquired by the standard different from the data set used in the previous repetitive process.

In the present embodiment, the data includes a pair of explanatory variables and objective variable. Therefore, when the change condition of data acquisition is satisfied, the data acquisition unit 20 randomly acquires the explanatory variables and also acquires the objective variable paired with the acquired explanatory variables. Then, the regression model generation unit 22 adds the data randomly acquired by the data acquisition unit 20 to the data set acquired so far to generate the regression model.

As described above, the information processing device 10 according to the present embodiment, the regression model is generated by FM method by using a data set to which a data randomly acquired by the data acquisition unit 20 is added. Thus, randomness is introduced in the acquisition of data. As a result, the FM method of a deterministic algorithm becomes to have the characteristics of a probabilistic algorithm, and can prevent the regression model from getting stuck in the local optimum solution.

In the present embodiment, the condition change of data acquisition is checked every time a total number of data acquisitions (hereinafter referred to as "data acquisition count") reaches a predetermined number of times. The predetermined number of times may be appropriately set. For example, a regression model may be generated by alternately repeating data acquisition based on the optimum solution and data acquisition in random manner. As a result, the condition for the data acquisition unit 20 to randomly acquire the new data can be easily set.

The predetermined number of times may be changed according to the number of times of data acquisition executed by the data acquisition unit 20. For example, when the number of data acquisition is small, the predetermined number of times for the change condition of data acquisition may be set to a large value. As the number of data acquisition increases, the predetermined number of times for the change condition of data acquisition may be decreased accordingly. More specifically, when the number of data acquisitions is 0 to 50, the predetermined number may be set to 10 times. When the number of data acquisitions is 51 to 100, the predetermined number may be set to 5 times. When the number of data acquisitions is 101 or more, the predetermined number of times may be set to twice. In other words, the acquisition of data based on the regression model and the acquisition of data in random manner are alternately performed. The predetermined number of times is not limited to above examples. For another example, when the number of times of data acquisition is small, the predetermined number of times for condition change of data acquisition may be set to a small value. As the number of times of data acquisition increases, the predetermined number of times for change condition of data acquisition may be increased.

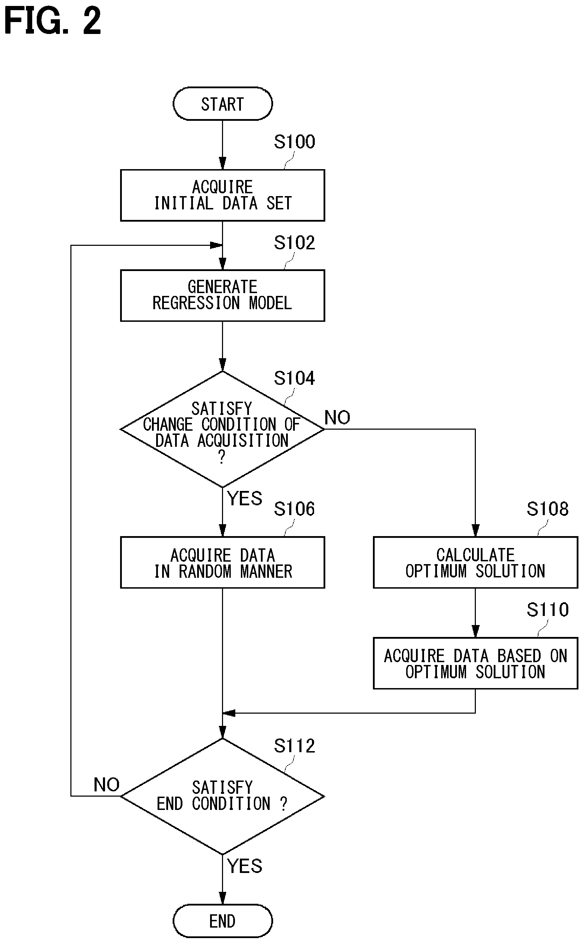

The following will describe a flow of the regression model generation process according to the present embodiment with reference to the flowchart shown in FIG. 2. The regression model generation process may be executed by a program stored in a storage medium such as the large capacity storage 18 included in the information processing device 10. By executing the program using the information processing device 10, a method corresponding to the program is performed by the information processing device 10.

As shown in FIG. 2, in S100, the data acquisition unit 20 acquires a data set (hereinafter referred to as "initial data set") for generating the regression model.

In S102, the regression model generation unit 22 generates a regression model by FM method using the data set acquired by the data acquisition unit 20.

In S104, the condition determination unit 28 determines whether the regression model generation process satisfies the change condition of data acquisition. That is, in S104 of the present embodiment, the information processing device 10 determines whether the number of data acquisitions reaches the predetermined number of times. In S104, in the case of affirmative determination, the process proceeds to S106, and in the case of negative determination, the process proceeds to S108.

In S106, the data acquisition unit 20 acquires the data in random manner and proceeds to S112. In the next S102 executed after transition from S106 and S112, the data randomly acquired in S106 is added to the data set acquired so far, and the regression model generation unit 22 generates a new regression model using the newly generated data set.

When the data randomly acquired in S106 is included in the already acquired data set, the data acquisition unit 20 may acquire a new data in random manner again.

In S108 after the negative determination in S104, the optimum solution calculation unit 24 obtains the optimum solution of the regression model generated in S102.

In S110, the data acquisition unit 20 acquires data based on the optimum solution obtained in S108, and proceeds to S112. In the next S102 executed after transition from S108, S110 and S112, the data newly acquired in S110 is added to the data set acquired so far, and the regression model generation unit 22 generates a new regression model using the newly generated data set.

In S112, the repetition control unit 26 determines whether the end condition is satisfied. In response to the determination of end condition, the regression model generation process is terminated. In a case where the determination condition is not satisfied, the process returns to S102. For example, the end condition may be satisfied when the number of times the regression model is generated reaches a predetermined number of times, or when the performance of the regression model satisfies a predetermined level.

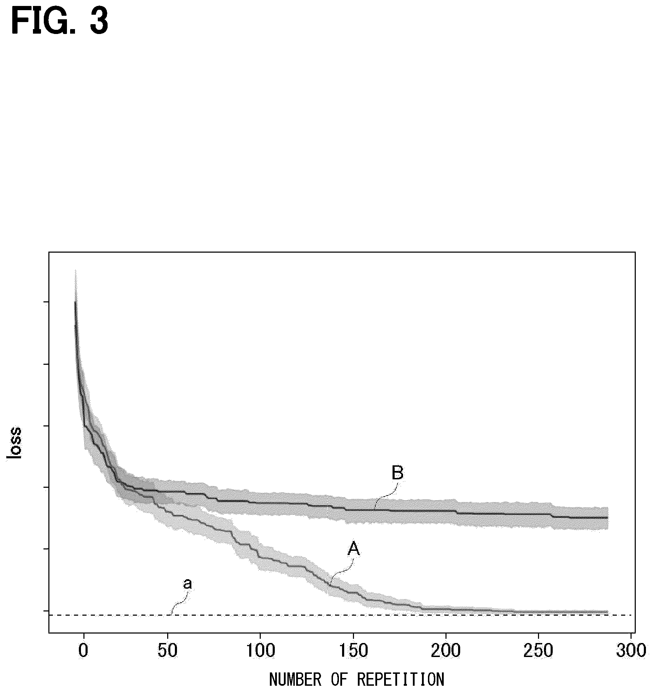

FIG. 3 is a diagram showing a comparison between a case where the regression model generation process according to the present embodiment is performed and a case where the regression model generation process according to the present embodiment is not performed. The horizontal axis of FIG. 3 shows the number of repetitions of the regression model generation process, and the vertical axis of FIG. 3 shows loss as an evaluation index of the performance of the generated regression model. The smaller the loss, the better the performance of the regression model. The broken line a shows a loss value (hereinafter referred to as "optimal loss value") corresponding to the best regression model that can be obtained.

The performance line A shows the performance of the regression model in the case where the regression model is generated by using the data set in which the data acquired based on the optimum solution of the regression model and the data acquired in random manner are alternately added. That is, on the performance line A, the condition of data acquisition is changed every two generation of the regression model. The performance line B shows the performance of the regression model generated by using the data set including only of the data acquired based on the optimum solution of the regression model without data acquisition in random manner.

In the example of FIG. 3, there is no big difference between the performance line A and the performance line B until the number of repetitions increases to 40 times. As the number of repetitions increases further after reaching 40 times, the performance line A, that is, the regression model generated using the data set including the randomly acquired data has a higher performance than the regression model generated using the data set including only the data acquired based on the optimum solution. Thus, the information processing device 10 of the present embodiment can build a regression model with higher performance.

### (Modifications Examples)

The following will describe modification examples of the present embodiment. The above-described embodiment and the modification examples may be combined with one another as appropriate.

### (First Modification)

The data acquisition condition according to a first modification example may be set based on the performance of the generated regression model. By setting the data acquisition conditions based on the performance of the generated regression model, it is possible to generate a regression model having a designed performance.

The change condition of data acquisition in the present modification may be set to be satisfied, for example, in a case where the performance of the regression model repeatedly generated does not improve further. When the performance of the regression model does not improve, it indicates that the optimum solution obtained by the regression model may be stuck in the local optimum solution. In such a case, by generating a regression model using a data set including randomly acquired data, it is possible to escape from the local optimal solution and improve the performance of the generated regression model.

The regression model generation process in the present modification is the same as the regression model generation process shown in FIG. 2. Further, in the case where the performance of the regression model does not improve further is, for example, the case where the evaluation index such as the loss does not improve even if a new regression model is generated.

The change condition of data acquisition in the present modification may be satisfied in a case where the performance of the generated regression model fails to satisfy a predetermined performance (hereinafter referred to as "reference performance"). For example, the reference performance may be set to a value which is increased by 50% of the optimum loss value shown in FIG. 3 As a result, data for generating the regression model is randomly acquired until the loss of the regression model reaches 50% increase of the optimum loss value. After reaching 50% increase of the optimum loss value, another condition change of data acquisition may be applied. The optimum loss value may be set arbitrarily or may be calculated theoretically. The reference performance may be set based on an index other than the optimum loss value.

### (Second Modification)

The change condition of data acquisition according to a second modification may set to be satisfied in a case where the data newly acquired by the data acquisition unit 20 is included in the already acquired data set. In such a case, the regression model generated by the deterministic algorithm is the same as the regression model already generated, and no further improvement in performance can be expected.

Therefore, when the data newly acquired by the data acquisition unit 20 is included in the already acquired data set, a new regression model is generated using a data set to which the randomly acquired data is added. Therefore, the performance of the regression model newly generated can be improved.

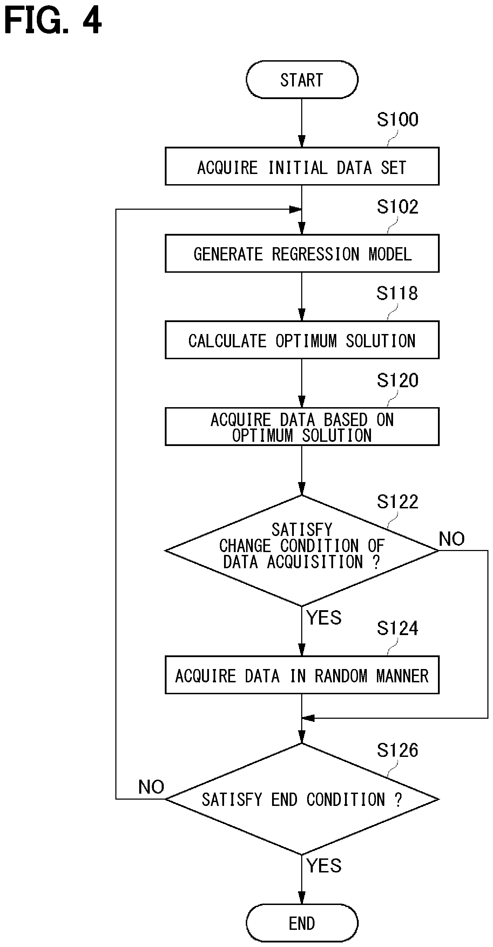

FIG. 4 is a flowchart showing the flow of the regression model generation process according to the present modification.

First, in S100, the data acquisition unit 20 acquires initial data for generating a regression model. In S102, the regression model generation unit 22 adds the data acquired by the data acquisition unit 20 to the data set, and generates a regression model by FM method.

In S118, the optimum solution calculation unit 24 calculates the optimum solution of the regression model generated in S102.

In S120, the data acquisition unit 20 acquires data based on the optimum solution obtained in S118.

In S122, the condition determination unit 28 determines whether the regression model generation process satisfies the change condition of data acquisition. That is, in S122, it is determined whether the data acquired in S120 is included in the already acquired data set.

In S122, in the case of affirmative determination, the process proceeds to S124, and in the case of negative determination, the process proceeds to S126. In the next S102 executed after transition from S122 and S126, the data newly acquired in S120 is added to the data set acquired so far, and the regression model generation unit 22 generates a new regression model using the newly generated data set.

In S124, the data acquisition unit 20 acquires the data in random manner and proceeds to S126. In the next S102 executed after transition from S122, S124, and S126, the data randomly acquired in S124 is added to the data set acquired so far, and the regression model generation unit 22 generates a new regression model using the newly generated data set.

In S126, the repetition control unit 26 determines whether the end condition is satisfied. In response to the determination of end condition, the regression model generation process is terminated. In a case where the determination condition is not satisfied, the process returns to S102.

### (Third Modification)

In the third modification, when the regression model generation process satisfies the change condition of data acquisition, the regression model is generated using a subset of the data set acquired so far. The subset in the present modification is randomly determined from the already acquired data set.

As described above, the first embodiment and the first and second modification examples relate to the random acquisition of data for generating the regression model. In the present modification example is about selection of data set in random manner for generating the regression model.

As in the present modification, the method of generating a regression model using a subset of the data set acquired so far is similar to a concept of stochastic gradient descent (SGD).

As a result, in the present modification, the regression model is generated using the data set acquired under different criterion. Thus, the FM can be provided with the characteristics of the probabilistic algorithm.

FIG. 5 is a flowchart showing the flow of the regression model generation process according to the present modification.

As shown in FIG. 5, when a positive determination is made in S104, the regression model generation unit 22 selects a subset of the data set in S105. Then, in the next S102 executed after transition from S105 and S112, the regression model generation unit 22 generates a new regression model using the subset selected in S105 without using the data set acquired so far.

After generating the new regression model using the subset selected in S105, suppose that the new data is acquired in S108 and S110 in the next repetition. Then, in the further next step 102, the data acquired in S108 and S110 is added to the previously acquired data set to generate a regression model.

In a case where the data acquired in S108 and S110 is already included in the data acquired so far after the regression model is generated using the subset, the data may be acquired as described in the second modification. Specifically, new data may be acquired in random manner since the newly acquired data based on optimum solution is already included in the data set. Then, the data acquired in random manner may be added to the subset to generate a regression model.

In the present modification, the subset may be not randomly selected from the data set. Instead, the subset may be selected based on a predetermined reference from the data set.

### (Fourth Modification)

In a fourth modification, the change condition of data acquisition may be set according to the number of data acquisitions. As a result, random data can be acquired according to the number of data acquisitions without bias.

For example, the change condition of data acquisition may be set to be satisfied in a case where the performance of the regression model reaches a predetermined high level. In this case, the random data acquisition is not performed unless the number of repetitions of regression model generation increases to a predetermined large times (late stage of repetition). In order to perform random data acquisition even when the number of repetitions of regression model generation is small, the random data may be acquired every time the acquisition time of data reaches a predetermined count. For example, when the number of data acquisitions is less than 100, random data may be configured to be acquired every time the number of data acquisitions reaches the predetermined count.

For example, the change condition of data acquisition may be set to be satisfied in a case where the performance of the regression model reaches a predetermined low level. In this case, the random data acquisition is performed only when the number of repetitions of regression model generation is relatively small (early stage of repetition). In order to perform random data acquisition even when the number of repetitions of regression model generation is large, the random data may be acquired every time the acquisition time of data reaches a predetermined count. For example, when the number of data acquisitions is equal to or larger than 100, random data may be configured to be acquired every time the number of data acquisitions reaches the predetermined count.

Although the present disclosure is described with the embodiment and modifications as described above, the technical scope of the present disclosure is not limited to the scope described in the embodiment and modifications described above. Various changes or improvements can be made to the above embodiment and modifications without departing from the spirit of the present disclosure, and other modifications or improvements are also included in the technical scope of the present disclosure.

In the above embodiment, when the regression model generation process satisfies the change condition of data acquisition, the regression model generation unit 22 acquires the data in random manner and generates the data set to include the random data for generating the regression model. However, the present disclosure is not limited to this example. In a case where the regression model generation process satisfies the change condition of data acquisition, the regression model may be generated using the data set acquired by different criterion. For example, multiple data sets may be prepared in advance, and the multiple data sets may be used to generate a regression model by the regression model generation unit 22 in a random order or in a predetermined order.

In the above embodiment, Factorization Machine (FM) is used as the algorithm for generating the regression mode as an example. However, the present disclosure is not limited to this example, and the regression model may be generated by other deterministic algorithms.

### (Preferred aspects)

The present invention can be embodied according to the following aspects:
An information processing device according to a first aspect comprises:
a data acquisition unit (20) acquiring data to prepare a data set;
a regression model generation unit (22) generating a regression model using the data set prepared by the data acquisition unit; and
an optimum solution calculation unit (24) calculating an optimum solution from the regression model generated by the regression model generation unit (22);
wherein
the data acquisition unit (20) repetitively acquire the data based on the optimum solution and updates the data set,
the regression model generation unit (22) repetitively generates the regression model using the updated data set,
the data acquisition unit (20) acquires the data and prepares the data set based on a different criterion in response to a satisfaction of a predetermined condition, and
the regression model generation unit (22) generates the regression model using the data set prepared based on the different criterion.

An information processing device according to a second aspect, which further specifies the information processing device according to the first aspect, wherein
the data acquisition unit (20) acquires the data in random manner in response to the satisfaction of the predetermined condition, and
the regression model generation unit (22) adds the data acquired in random manner to the data set and generates the regression model using the data set.

An information processing device according to a third aspect, which further specifies the information processing device according to the first or the second aspect, wherein
the predetermined condition is satisfied when a repetition number of data acquisition reaches a predetermined count.

An information processing device according to a fourth aspect, which further specifies the information processing device according to any one of the first to third aspect, wherein
the predetermined condition is satisfied when a performance of the generated regression model reaches a predetermined level.

An information processing device according to a fifth aspect, which further specifies the information processing device according to the first to fourth aspect wherein
the predetermined condition is satisfied when the data acquired by the data acquisition unit (20) is already included in the data set.

An information processing device according to a sixth aspect, which further specifies the information processing device according to the first to fifth aspect, wherein
the regression model generation unit (22) generates the regression model using a subset of the data set in response to the satisfaction of the predetermined condition.

An information processing device according to a seventh aspect, which further specifies the information processing device according to the first to sixth aspect wherein
the predetermined condition is changed according to a repetition number of data acquisition.

A regression model generation method according to an eighth aspect comprises:
acquiring data and preparing a data set with the acquired data;
generating a regression model using the data set;
calculating an optimum solution from the generated regression model;
repetitively acquiring the data based on the calculated optimum solution and updating the data set; and
repetitively generating the regression model using the updated data set,
wherein
the acquiring of data and the preparing of data set are executed based on a different criterion in response to a satisfaction of a predetermined condition, and
the generating of regression model is executed using the data set prepared based on the different criterion.

A program product according to a ninth aspect is stored in a computer readable non-transitory tangible storage medium, the program product comprising instructions to be executed by a computer, the instructions comprising:
acquiring data and preparing a data set with the acquired data;
generating a regression model using the data set;
calculating an optimum solution from the generated regression model;
repetitively acquiring the data based on the calculated optimum solution and updating the data set; and
repetitively generating the regression model using the updated data set,
wherein
the acquiring of data and the preparing of data set are executed based on a different criterion in response to a satisfaction of a predetermined condition, and
the generating of regression model is executed using the data set prepared based on the different criterion.

## Claims

1. An information processing device comprising:
a calculator (12) provided by a quantum computer or a classical computer;
a computer readable non-transitory tangible storage medium (18) storing a program to be executed by the calculator; and
a random access memory (16) functioning as a working area of the calculator (12) for executing the program,
wherein
the calculator, by executing the program stored in the computer readable non-transitory tangible storage medium, is configured to provide:
a data acquisition unit (20) acquiring data to prepare a data set;
a regression model generation unit (22) generating a regression model using the data set prepared by the data acquisition unit, the regression model is generated by a deterministic algorithm of Factorization Machines (FM) method; and
an optimum solution calculation unit (24) calculating an optimum solution from the regression model generated by the regression model generation unit (22);
the data acquisition unit (20) repetitively acquires the data based on the optimum solution and updates the data set,
the regression model generation unit (22) repetitively generates the regression model using the updated data set,
the data acquisition unit (20) acquires the data in random manner and prepares the data set based on a different criterion in response to a satisfaction of a predetermined condition, the regression model generation unit (22) adds, to the already acquired data set, the data acquired in random manner, and generates the regression model using the data set prepared based on the different criterion,
the regression model generation unit (22) calculates an evaluation index indicating a performance of the generated regression model, and
in a case where the performance of the regression model indicated by the evaluation index does not improve further, the predetermined condition is determined to be satisfied and the data acquisition unit (20) prepares the data set for generating the regression model based on the different criterion.

2. The information processing device according to claim 1, wherein
the predetermined condition is satisfied when a repetition number of data acquisition reaches a predetermined count.

3. The information processing device according to claim 1 or 2, wherein
the predetermined condition is satisfied when a performance of the generated regression model reaches a predetermined level.

4. The information processing device according to any one of claims 1 to 3, wherein
the predetermined condition is satisfied when the data acquired by the data acquisition unit (20) is already included in the data set.

5. The information processing device according to any one of claims 1 to 4, wherein in response to the satisfaction of the predetermined condition, the regression model generation unit (22) acquires a subset of the already acquired data set in random manner, and generates the regression model using the subset of the data set.

6. The information processing device according to any one of claims 1 to 5, wherein
the predetermined condition is changed according to a repetition number of data acquisition.

7. A computer-implemented regression model generation method executed by a calculator, the calculator being provided by a quantum computer or a classical computer and executing a program stored in a computer readable non-transitory tangible storage medium to implement the regression model generation method, the regression model generation method comprising:
acquiring data and preparing a data set with the acquired data;
generating a regression model using the data set, the regression model being generated by a deterministic algorithm of Factorization Machines (FM);
calculating an optimum solution from the generated regression model;
repetitively acquiring the data based on the calculated optimum solution and updating the data set; and
repetitively generating the regression model using the updated data set,
wherein
the acquiring of data, which acquires the data in random manner, and the preparing of data set, which prepares the data set by adding the data acquired in random manner to the already acquired data set, are executed based on a different criterion in response to a satisfaction of a predetermined condition,
the generating of regression model is executed using the data set prepared based on the different criterion,
an evaluation index indicating a performance of the generated regression model is calculated, and
in a case where the performance of the regression model indicated by the evaluation index does not improve further, the predetermined condition is determined to be satisfied and the data set for generating the regression model based on the different criterion is prepared.

8. A program product stored in a computer readable non-transitory tangible storage medium, the program product comprising instructions to be executed by a computer, the instructions comprising:
acquiring data and preparing a data set with the acquired data;
generating a regression model using the data set, the regression model being generated by a deterministic algorithm of Factorization Machines (FM);
calculating an optimum solution from the generated regression model;
repetitively acquiring the data based on the calculated optimum solution and updating the data set; and
repetitively generating the regression model using the updated data set,
wherein
the acquiring of data, which acquires the data in random manner, and the preparing of data set, which prepares the data set by adding the data acquired in random manner to the already acquired data set, are executed based on a different criterion in response to a satisfaction of a predetermined condition, and
the generating of regression model is executed using the data set prepared based on the different criterion,
an evaluation index indicating a performance of the generated regression model is calculated, and
in a case where the performance of the regression model indicated by the evaluation index does not improve further, the predetermined condition is determined to be satisfied and the data set for generating the regression model based on the different criterion is prepared.
